# EUROPÄISCHE PATENTANMELDUNG

(11) **EP 3 301 371 A1**
(43) Veröffentlichungstag der Anmeldung: **04.04.2018**
(21) Anmeldenummer: 17193519.0
(22) Anmeldetag: 27.09.2017
(51) Int. Cl.: F23R 3/28

(54) **Brennkammersystem, Verwendung eines brennkammersystems mit einer angeschlossenen Turbine und Verfahren zur Durchführung eines Verbrennungsprozesses**

(30) Priorität: 30.09.2016 DE 102016118632
(71) Anmelder: Deutsches Zentrum Für Luft- Und Raumfahrt E.V. (DLR), 51147 Köln (DE)
(72) Erfinder: HUBER, Andreas, 70374 Stuttgart (DE); SELIGER, Hannah, 70825 Korntal-Münchingen (DE); HOHLOCH, Martina, 70839 Gerlingen (DE); MONZ, Thomas, 73278 Schlierbach (DE)
(74) Vertreter: Fleck, Hermann-Josef

(57) **Zusammenfassung**

Die Erfindung betrifft ein Brennkammersystem (1) mit einem sich in Richtung einer Längsachse (L) innerhalb einer Umfangswandung (3) einer Brennkammer (10) erstreckenden Brennraum (2), innerhalb dessen im Betrieb eine Rezirkulationsströmung mit großteils durch eine innere Rezirkulationszone zurückgeführtem Abgas ausgebildet ist und der eingangsseitig von einer umlaufend mit Zufuhröffnungen (46) für Brennluft und Brennstoff versehenen Stirnwand (40) begrenzt ist und ausgangsseitig eine Ausströmöffnung (31) aufweist und mit einem Brennerkopf (4), über den Brennluft und Brennstoff über gemeinsame Zufuhröffnungen (46) teilweise vorgemischt oder über separate Zufuhröffnungen (46) getrennt in die Brennkammer (10) zugeführt sind, wobei die Zufuhröffnungen (46) in ringförmiger Anordnung im äußeren Bereich der Stirnwand (40), näher an der Umfangswandung (3) als an der Längsachse (L) gelegen, angeordnet sind und wobei der Radius der Ausströmöffnung (31) mindestens so groß ist wie der radiale Abstand der Zufuhröffnungen (46) von der Längsachse (L). Eine über einen weiten Betriebsbereich stabile Verbrennung wird dadurch erreicht, dass die Brennkammer (10) und der Brennerkopf (4) so ausgelegt sind, dass eine Rezirkulationsrate im Betriebszustand zwischen 0,4 und 1,5 beträgt.

## Beschreibung

Die Erfindung betrifft ein Brennkammersystem mit einem sich in Richtung einer Längsachse innerhalb einer Umfangswandung einer Brennkammer erstreckenden Brennraum, innerhalb dessen im Betrieb eine Rezirkulationsströmung mit großteils durch eine innere Rezirkulationszone zurückgeführtem Abgas ausgebildet ist und der eingangsseitig von einer umlaufend mit Zufuhröffnungen für Brennluft und Brennstoff versehenen Stirnwand begrenzt ist und ausgangsseitig eine Ausströmöffnung aufweist, und mit einem Brennerkopf, über den Brennluft und Brennstoff über gemeinsame Zufuhröffnungen teilweise vorgemischt oder über separate Zufuhröffnungen getrennt in die Brennkammer zugeführt sind, wobei die Zufuhröffnungen in ringförmiger Anordnung im äußeren Bereich der Stirnwand, näher an der Umfangswandung als an der Längsachse gelegen, angeordnet sind und wobei der Radius der Ausströmöffnung mindestens so groß ist wie der radiale Abstand der Zufuhröffnungen von der Längsachse. Weiterhin betrifft die Erfindung die Verwendung eines Brennkammersystems mit einer angeschlossenen Turbine und ein Verfahren zur Durchführung eines Verbrennungsprozesses.

Ein derartiges Brennkammersystem ist beispielsweise in Gasturbinenanlagen vorteilhaft einsetzbar und ist aus der Veröffentlichung "Li, G., Gutmark, E. J., Stankovic, D., Overman, N., Cornwell, M., Fuchs, L. und Milosavljevic, V., Experimental Study of Flameless Combustion in Gas Turbine Combustors, 44th AIAA 9.-12. Januar 2006" bekannt. Dieses Brennkammersystem ist ausgelegt zum Verbrennungsbetrieb mit "flammenloser Oxidation", die auf der Ausbildung einer großräumigen Rezirkulationsströmung basiert. Durch die Rezirkulation werden bereits verbrannte Abgase innerhalb der Brennkammer zurückgeführt und der zugeführten Frischluft in größerer Menge beigemischt.

Eine grundlegende Veröffentlichung zu dem Verbrennungskonzept der "flammenlosen Oxidation" (Wünning, J. A. und Wünning, J. G., Flameless Oxidation to reduce thermal NO-formation, Progress in Energy and Combustion Science, Vol. 23, 1997, pp. 81-94), die auch in dem vorgenannten Dokument an erster Stelle (Referenz 1) zitiert ist, stellt dieses Verbrennungskonzept herkömmlichen Verbrennungskonzepten gegenüber. Dabei wird unter anderem die Rezirkulationsrate als ein entscheidender, die Flammenstabilität beeinflussender Parameter angegeben. Gemäß Fig. 9 und zugehöriger Beschreibung ergibt sich ein instabiler Bereich für Rezirkulationsraten zwischen etwa 0,3 und 2. Die flammenlose Oxidation nutzt wiederum einen stabilen Bereich mit Rezirkulationsraten von mehr als 2.

Bei einem in der EP 1 497 589 B1 angegebenen Brennkammersystem sind der Eingang und der Ausgang der Brennkammer so ausgerichtet, dass sich im Innenraum der Brennkammer eine großräumige Rezirkulationsströmung mit einer "flammenlosen Oxidation" ausbildet. Die Rezirkulationsrate, d.h. das Massenverhältnis an zurückgeführtem Abgas zu zugegebener Frischluft (entsprechend annähernd auch der Gesamtmasse an Frischgasen, d.h. inkl. Brennstoff), soll dabei 2 bis 5 betragen.

Ein weiteres Brennkammerkonzept, ebenfalls basierend auf der flammenlosen Oxidation, ist aus dem Dokument "Zanger, J., Monz, T, Aigner, M., Experimental Investigation of the Combustion Characteristics of a double-staged FLOX®-based Combustor on an Atmospheric and a Micro Gas Turbine Test Rig, Proceedings of ASME Turbo Expo 15.-19. Juni 2015" bekannt. Das dort angegebene Brennkammersystem ist zweistufig ausgeführt. Die hierbei eingesetzte Pilotstufe bewirkt eine verbesserte Stabilität über einen weiten Betriebsbereich, die allerdings eine erhöhte Komplexität der Brennkammer mit sich bringt. Dies betrifft insbesondere kleinsten Mikrogasturbinen (niedrigster Leistungsklassen) aufgrund des geringen Bauraums und der erhöhten Komplexität der Teile durch geringe Abmessungen.

Durch die flammenlose Oxidation lässt sich die Verbrennung, die in der Regel mit Luftüberschuss erfolgt, mit sehr geringen Emissionen (insbesondere Stickoxidemissionen) durchführen, die unterhalb der für Gasturbinenverbrennung geltenden Grenzwerte liegen. Dies gilt insbesondere auch für Anwendungsfälle (z.B. Mikrogasturbine mit Hochtemperatur beständigem Rekuperator), in denen die Lufttemperatur am Eintritt in die Brennkammer über der Selbstzündtemperatur des eingesetzten Brennstoffs liegt. Allerdings ist dieser Verbrennungsmodus nur in begrenzten Betriebsbereichen anwendbar, wobei beispielsweise die Brennkammer zunächst auf eine zur flammenlosen Oxidation geeignete Temperatur zu bringen ist. Dies geschieht in der Regel über ein oder eine stromauf des Brenners eingesetzte/s weitere/s Brennersystem oder Brennerstufe. Ein weiterer Nachteil der flammenlosen Oxidation in der Gasturbine ist die in der Regel großräumige Verbrennungszone. Zudem ergibt sich durch die meist erforderliche Einschnürung der Brennkammer und auch die erforderlichen hohen Gasgeschwindigkeiten zum Erreichen der flammenlosen Oxidation ein verhältnismäßig hoher Druckverlust über die Brennkammer.

Weitere Brennkammersysteme, die auf anderen Verbrennungskonzepten mit anderen Auslegungsparametern basieren, sind beispielsweise aus der US 7 426 833 B2, US 5 339 635 A und der US 2014/0157779 A1 bekannt.

Der Erfindung liegt die Aufgabe zugrunde, ein effizientes Brennkammersystem bereitzustellen, das über einen weiten Betriebsbereich einen stabilen Verbrennungsprozess mit geringen Emissionen ermöglicht, sowie ein Verfahren zur Durchführung eines solchen Verbrennungsprozesses anzugeben.

Die Aufgabe wird für das Brennkammersystem mit den Merkmalen des Anspruchs 1, für dessen Verwendung mit einer Turbine mit den Merkmalen des Anspruchs 13 und für das Verfahren mit den Merkmalen des Anspruchs 14 gelöst.

Gemäß Anspruch 1 ist vorgesehen, dass die Brennkammer und der Brennerkopf so ausgelegt sind, dass eine Rezirkulationsrate im Betriebszustand zwischen 0,4 und 1,5 beträgt. Bevorzugt beträgt die Rezirkulationsrate höchstens 1, z. B. zwischen 0,4 und 0,8. Hierbei können sich je nach Brennstoff-/Luftverhältnis auch Einzelflammen ausbilden. Die geforderten Rezirkulationsraten können mit geringeren Eintrittsgeschwindigkeiten der zugegebenen Brennluft im Vergleich zum Betrieb mit flammenloser Oxidation erreicht werden. Somit verringert sich der Druckverlust über den Brennerkopf gegenüber dem Betrieb mit flammenloser Oxidation, von der ausgehend das vorliegende Konzept entwickelt wurde, und den dabei erforderlichen hohen Rezirkulationsraten. Dennoch ergibt sich überraschenderweise ein stabiler Betrieb mit den geforderten niedrigen Emissionswerten, wie Untersuchungen gezeigt haben.

Die Rezirkulationsrate ist, wie dem Fachmann bekannt ist, durch eine Vielzahl von Auslegungsmaßnahmen betreffend Brennkammer und Brennerkopf beeinflussbar. Hierzu zählen z.B. die Anordnung der Zufuhrdüsen an der Brennkammerstirnwand, die Dimensionierung der Zufuhrdüsen und die Einschnürung des Brennkammeraustritts. Wie Untersuchungen der Erfinder gezeigt haben, kann die Rezirkulationsrate auch durch die in die Umfangswandung eingebrachten Mischluftöffnungen beeinflusst sein, durch die dem Abgas stromab der Reaktionszone Mischluft zugegeben wird.

Die Abstimmung der Auslegungsmaßnahmen aufeinander unter Einhaltung der in dem Anspruch 1 niedergelegten Kombination von Auslegungskriterien zum Erhalt des genannten Bereichs der Rezirkulationsrate hat sich als besonders vorteilhaft herausgestellt. Wie Untersuchungen der Erfinder gezeigt haben, ermöglicht entgegen der herrschenden Meinung in der Fachwelt ein Betrieb eines derartigen Brennkammersystems in dem beanspruchten Bereich der Rezirkulationsrate einen stabilen Betrieb mit geringen Emissionen über einen weiten Betriebsbereich, von Zündung über Teillast bis Volllast, wie er insbesondere für Mikrogasturbinen aufgrund der vielfältigen und flexiblen Einsatzgebiete erforderlich ist. Von wesentlichem Vorteil ist hierbei, dass auf weitere stabilisierende Maßnahmen, wie beispielsweise auf einen zweistufigen Brenner-Aufbau mit weiteren Brennerstufen zur Stabilisierung während des Betriebs oder zur Aufheizung verzichtet werden kann. Auf diese Weise lässt sich die Komplexität des Brennkammersystems reduzieren, was sich insbesondere bei kleinen und kleinsten Gasturbinen, sogenannten Mikrogasturbinen, aufgrund des geringen Bauraums und der erhöhten Komplexität der Teile durch geringe Abmessungen als vorteilhaft herausgestellt hat.

Die Zufuhröffnungen befinden sich vorzugsweise in ringförmiger Anordnung im äußeren Bereich der Stirnwand, sodass sich während der Verbrennung eine Rezirkulationsströmung mit großteils innerer Rezirkulation ausbildet, und eine äußere Rezirkulation im Wesentlichen unterbunden wird. Der radiale Abstand der Zufuhröffnungen bemisst sich bezüglich der Mitte der Zufuhröffnungen. Durch die bevorzugt innere Rezirkulation lässt sich eine - insbesondere bezüglich der Länge - kompakte Brennkammer gestalten. "Großteils innere Rezirkulation" bedeutet, dass (bevorzugt wesentlich) mehr als 50% des rezirkulierenden Abgases durch die innere Rezirkulationszone zurückgeführt wird. Die innere Rezirkulationszone ist von einer Verbrennungszone umgeben, in der die Verbrennungsreaktionen zwischen Brennluft und Brennstoff stattfinden. Vorzugsweise beträgt der radiale Abstand der Zufuhröffnungen zur Umfangswandung weniger als ein Drittel, bevorzugt weniger als Viertel des Abstandes der Zufuhröffnungen zur Längsachse, sodass sie nahe bzw. im Wesentlichen entlang der Umfangswandung angeordnet sind.

Bei einer teilweise vorgemischten Zugabe von Brennluft und Brennstoff liegen bei deren Eintritt in die Brennkammer - in Abgrenzung zu einer perfekten (im Sinne einer technisch vollständigen) Vormischung - Bereiche unterschiedlicher Mischungszustände in dem Frischgasgemisch vor, die bis hin zu Bereichen reinen Brennstoffs und reiner Brennluft reichen können. Je nach Anwendungsbereich, Brennstoff und/oder dgl. kann eine teilweise vorgemischte oder separate Zuführung der Gase günstiger sein.

Durch eine derartige Ausbildung des Brennkammersystems ist eine geringere Rezirkulationsrate (hier definiert als zurückgeführtes Abgas im Verhältnis zu zugeführtem Frischgas, d.h. Brennluft und Brennstoff) erreichbar als bei Ausführung des Brennkammersystems mit einer Austrittsöffnung, deren Radius gegenüber dem radialen Abstand der Zufuhröffnungen von der Längsachse verkleinert ist. Durch die geringere Rezirkulationsrate lässt sich über einen weiten Betriebsbereich des Brennkammersystems, wie er insbesondere für den Betrieb im Einsatz von Gasturbinensystemen benötigt wird, ein stabiler Verbrennungsprozess erreichen, z.B. ohne dass hierfür weitere Brenner oder Brennerstufen zur Aufheizung bzw. Stabilisierung notwendig sind. Dabei bildet sich in der Regel eine ringförmige Verbrennungszone mit den einzelnen Zufuhröffnungen zugeordneten Einzelflammen aus. Auf diese Weise lässt sich das Brennkammersystem mit teilweise vorgemischter oder separater Frischgaszugabe in weiten Betriebsbereichen, bei Zündung über Teillast bis Volllast, zuverlässig betreiben. Auch hat sich herausgestellt, dass dennoch die geforderten niedrigen Emissionswerte erreichbar sind. Durch eine derartige Ausführung ist keine Querschnittsänderung, insbesondere Verengung, der Brennkammer erforderlich, was die Herstellung der Brennkammer mit ihrer Umfangswandung deutlich vereinfacht und somit Kostenvorteile bringt. Für den Fall, dass der Eintritt in eine stromab folgende Komponente, insbesondere eine Turbine, einen geringeren Querschnitt aufweist als der Abgasbereich, ist nicht ausgeschlossen, dass stromab der Brennkammer im Abgasbereich eine Verjüngung als Übergang auf die stromab folgende Komponente vorgesehen ist. Diese nimmt dann jedoch keinen unmittelbaren Einfluss auf eine Strömungsumkehr in der Brennkammer.

In einer vorteilhaften Ausgestaltungsvariante besitzt die Umfangswandung der Brennkammer eine im Wesentlichen zylindrische Innenumfangsfläche mit einem insbesondere kreiszylindrischen Querschnitt des Brennraums und der Radius der Ausströmöffnung entspricht dem Radius eines Querschnitts des Brennraums.

Für eine teilweise vorgemischte Zuführung von Brennstoff und Brennluft kann der Brennerkopf vorteilhafterweise mindestens eine Mischstufe mit einströmseitiger Brennstoffdüse und einer diese umgebenden Luftzufuhr einer Zufuhrdüse in einer Luft-/ Brennstoffdüsenanordnung aufweisen. Dabei ist vorzugsweise jeweils eine Mischstufe mehreren, bevorzugt z. B. jeder einzelnen Zufuhröffnung zugeordnet, sodass eine symmetrische Zufuhr von Frischgasen (Luft und Brennstoff) in den Brennraum möglich ist.

Dabei ist eine vorteilhafte Brennstoffzugabe dadurch erreichbar, dass die Mündung der Brennstoffdüse (d.h. der Zugabebereich von Brennstoff in die Brennluft) radial in einem Zentrumsbereich, insbesondere im Wesentlichen auf einer Mittellängsachse, der Zufuhrdüse zur Zugabe des Brennstoffes in die Brennluft außerhalb des Wandströmungsbereiches angeordnet ist. Dabei kann beispielsweise der Brennstoff in Hauptströmungsrichtung der Brennluft, z.B. koaxial, in die Luftzufuhr zugegeben werden, oder quer dazu in einer Art "Jet-in-Crossflow", mit einem Winkel zwischen Hauptströmungsrichtung von Brennstoff zu Brennluft zwischen 90° und 0°. Die Zugabe in den Zentrumsbereich hat den Vorteil, dass hier größere Strömungsgeschwindigkeiten vorliegen als im Wandströmungsbereich. Dadurch ergeben sich geringere Aufenthaltszeiten des Brennstoffes in der Zufuhrdüse und die Gefahr von ungewolltem Flammenrückschlag in die und/oder ungewollter Selbstzündung in der Zufuhrdüse wird verringert, was wiederum die Zuverlässigkeit des Brennkammersystems erhöht. Bei einer Zugabe auf Höhe der Mittellängsachse ist eine gute Symmetrie und eine gleichmäßigere Verteilung des Brennstoffes in der Brennluft erreichbar. Dies begünstigt einen gleichmäßigen Verbrennungsprozess, bei dem lokal brennstoffreiche Gebiete und damit verbundene hohe Flammentemperaturen, die zu erhöhter Stickoxidbildung führen, vermieden werden. Zweckmäßigerweise kann stromab der Zugabestelle, d.h. Brennstoffdüse, eine gewisse Strecke bis zur Zufuhröffnung vorgesehen sein, auf der sich die beiden Gase teilweise vermischen können.

Bei der Mischstufe ist vorzugsweise die Mündung der Brennstoffdüse an einer axialen Position der Zufuhrdüse angeordnet, unmittelbar stromab oder stromauf derer die Luft-/ Brennstoffdüsenanordnung zur Beschleunigung der Brennluft ausgebildet ist, derart, dass der Brennstoff zu Beginn einer Beschleunigungsstrecke oder stromab davon in die bereits beschleunigende oder beschleunigte Strömung zugegeben wird. Die Beschleunigung ist beispielsweise dadurch erreichbar, dass die Zufuhrdüse eine, z.B. konische, Querschnittsverengung aufweist. Auch ein Querschnittssprung wäre möglich. "Unmittelbar stromab" bedeutet, dass ab (bei einer kontinuierlichen Verengung) oder an (bei einer sprunghaften Verengung) dieser Position auch die beschleunigte Brennluftführung beginnt. Der Brennstoff kann so zu Beginn einer Beschleunigungsstrecke der Luftströmung oder auch stromab davon in die bereits beschleunigende oder beschleunigte Luftströmung zugegeben werden. Dadurch wird ein Bereich hoher Geschwindigkeiten an und/oder stromab der Brennstoffzugabe-Position erreicht, wodurch sich die Gefahr von Flammenrückschlag an die Brennstoffdüse verringern und die Zuverlässigkeit des Brennkammersystems erhöhen lässt.

Wenn der Brennerkopf zum Zuführen des Brennstoffes mit einer zentralen Brennstoffzuführung versehen ist, erlaubt dies eine gleichmäßige Verteilung des Brennstoffs auf die Brennstoffdüsen und damit verbunden eine gleichmäßige Einbringung des Brennstoffes in die Zufuhrdüsen, was eine symmetrische Ausbildung der Verbrennungszone und damit eine kontrollierte Verbrennung unter kontrollierten Luft/Brennstoffverhältnissen begünstigt. Für eine lokal exakte Einbringung des Brennstoffes in die Zufuhrdüsen bilden vorzugsweise die Brennstoffzuführung und der Brennerkopf eine feste Einheit, wofür z.B. zumindest ein Positionierelement vorgesehen sein kann. Vorzugsweise ist der Bereich der zentralen Brennstoffzuführung, von dem die Zweigleitungen fingerartig abgehen (d.h. in einer fingerartigen Leitungsanordnung), zentral auf der Längsachse der Brennkammer angeordnet. So lässt sich die Leitungsanordnung symmetrisch, mit in gleicher Weise gestalteten (insbesondere gleich langen) einzelnen Zweigleitungen, ausbilden, was eine gleichmäßige Verteilung des Brennstoffes begünstigt. Wenn die fingerartige Leitungsanordnung des Brennstoffes mit Zweigleitungen unmittelbar von der zentralen Brennstoffzuführung abgeht, kann auf ein Brennstoffplenum verzichtet werden. Die fingerartige Leitungsanordnung reduziert aufgrund des im Vergleich zu einem Brennstoffplenum mit anschließender Aufteilung des Brennstoffs auf die einzelnen Brennstoffdüsen deutlich verringerten Druckverlusts den erforderlichen Brennstoffvordruck. Zudem kann vorteilhafterweise Totvolumen im Brennstoffsystem verringert werden, was Sicherheitsvorteile bringt.

Vorteilhafterweise weist der Brennerkopf zum Zuführen von Brennstoff eine mit den Zufuhröffnungen in Strömungsverbindung stehende fingerartige Leitungsanordnung mit Zweigleitungen auf, die an ihrem stromabseitigen Ende mit Brennstoffdüsen versehen sind, wobei die Zweigleitungen von der zentralen Brennstoffzuführung fingerartig abgehen. Die fingerartige Ausgestaltung ergibt sich z.B. aufgrund einer gewissen Leitungslänge, bspw. dreimal mehr als der Leitungsaußendurchmesser. Die Zweigleitungen können dabei für eine zielgerichtete Verteilung des Brennstoffes in die Zufuhröffnungen in ihrem Verlauf eine Richtungsänderung, insbesondere eine Biegung, aufweisen.

In einer weiteren bevorzugten Ausgestaltungsvariante ist zu Kühlungszwecken Mischluft außen an der Umfangswandung vorbeigeführt. Diese wird vorzugsweise aus einem Luftplenum stromauf der Stirnwand, aus dem auch die zur Verbrennung vorgesehenen Brennluft zugeführt wird, abgezweigt, und zwar in einem bestimmten, bei der Auslegung über die Geometrie festgelegten Verhältnis. Durch das Vorbeiführen der Mischluft wird insbesondere eine konvektive Kühlung der Umfangswandung erreicht, die für die Materiallebensdauer wesentlich ist.

Vorzugsweise sind zum Zuführen der Mischluft in das Abgas im ausgangsseitigen Endbereich der Brennkammer rundum in der Umfangswandung verteilt Mischluftöffnungen eingebracht. Durch das Zuführen wird eine Temperaturabsenkung des Abgases erreicht, das im weiteren Verlauf z.B. der Turbine zugeführt wird. Auf diese Weise kann sichergestellt werden, dass die maximal zulässige Materialtemperatur der Turbine nicht überschritten wird. Die Einbringung der Mischluft am Ende der Brennkammer bietet auch den besonderen Vorteil, dass auf diese Weise die Rezirkulation des Abgases innerhalb der Brennkammer unterstützt wird. Somit kann hier ein ähnlicher Effekt (gegebenenfalls weniger stark ausgeprägt) erreicht werden wie mit einer in der Umfangswandung vorgesehenen Verjüngung. Die Mischluftöffnungen sind dabei vorzugsweise derart stromab der Rezirkulationszone angeordnet, dass die Mischluft gerade eben nicht, oder zumindest nur teilweise, durch die Rezirkulation in die Verbrennungszone befördert wird, sondern dass der Großteil mit dem bereits verbrannten Abgas vermischt wird und stromab strömt.

In einer bevorzugten Ausgestaltungsvariante ist die Stirnwand oder eine ihr stromauf vorgelagerte Anströmfläche entgegen der Anströmrichtung konisch verjüngt. Auf diese Weise lässt sich eine verlustärmere Luftführung erreichen und somit unerwünschte Druckverluste im Brennkammersystem in Form von Anströmverlusten verringern. Insbesondere die Mischluft kann auf diese Weise verlustarm in Richtung der Umfangswandung geführt werden.

Eine symmetrische und damit gleichmäßige und kontrollierte Verbrennung lässt sich dadurch erreichen, dass die Umfangswandung eine zylindrische, insbesondere kreiszylindrische Innenumfangsfläche besitzt und länger ist als ihr Innendurchmesser.

In einer bevorzugten Variante sind der Brennerkopf und die Brennkammer für einen einstufigen Verbrennungsprozess ausgelegt. Insbesondere kann auf einen stabilisierenden Pilotbrenner verzichtet werden, der in der Regel zu Stabilisierungszwecken bei einer hohen Luftzahl der Hauptbrennerstufe (z.B. insbesondere im Teillastbereich einer Mikrogasturbine) mit einer dem gegenüber reduzierten Luftzahl betrieben wird. Auf diese Weise lässt sich die Komplexität des Brennkammersystems insbesondere bei kleinen und kleinsten Gasturbinen weiter reduzieren.

Besonders vorteilhaft lässt sich das erfindungsgemäße Brennkammersystem in Verbindung mit einer ausgangsseitig der Brennkammer angeschlossenen Turbine verwenden, insbesondere in Ausbildung als Mikrogasturbine. Derartige Mikrogasturbinenanlagen können beispielsweise als dezentrale Kraftwerke mit Kraft-Wärme-Kälte-Kopplung eingesetzt werden, z.B. als kleine Anlagen für die private Versorgung von Ein- und Mehrfamilienhäusern oder auch im gewerblichen und industriellen Bereich, auch zur Erzeugung von Prozessdampf, Prozesswärme (Thermoöl z. B. in Bäckereien), zur Klimatisierung oder dergleichen. Erfolgreich angewandt wurde das System bei Drücken unterhalb von 6 bar, insbesondere auch bei im wesentlichen Atmosphärendruck, beispielsweise bei subatmosphärischen Mikrogasturbinenanlagen, wobei der Anwendungsbereich nicht auf diesen Druckbereich beschränkt ist. Bei Mikrogasturbinenanlagen wird das Brennkammersystem typischerweise unter mageren Bedingungen, d.h. bei Sauerstoffüberschuss in der Verbrennung, betrieben. Typische Vorwärmtemperaturen der Luft können beispielsweise zwischen Umgebungsbedingungen und 750°C liegen, wobei die Luft zur Effizienzsteigerung der Anlage durch einen in der Anlage vorgesehenen Wärmetauscher (Rekuperator) vorgewärmt sein kann.

Nachfolgend wird die Erfindung anhand eines Ausführungsbeispiels unter Bezugnahme auf die Zeichnung näher erläutert. Es zeigt:

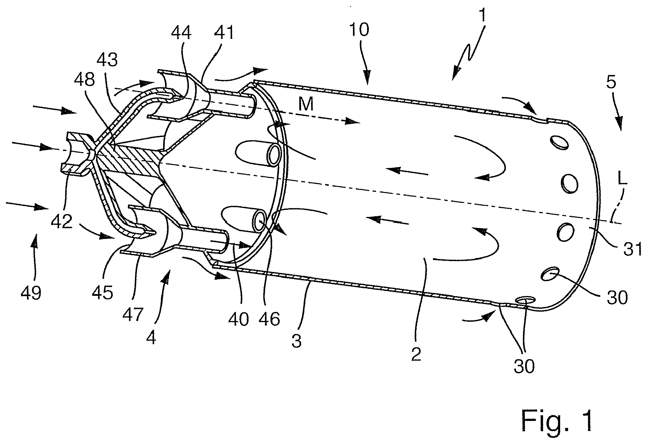

- Fig. 1: eine Schnittdarstellung durch ein Brennkammersystem mit einem Brennerkopf und einer Brennkammer.

Fig. 1 zeigt in einer Schnittdarstellung ein Brennkammersystem 1 mit einem Brennerkopf 4 und einer Brennkammer 10, die einen mit einer Umfangswandung 3 umgebenen Brennraum 2 umfasst. Das Brennkammersystem 1 erstreckt sich im Wesentlichen entlang einer Längsachse L, die in der gezeigten Ausführung ebenfalls die Symmetrieachse darstellt. Der Brennerkopf 4 weist für die Zufuhr von zu verbrennenden Frischgasen, d.h. Brennluft und Brennstoff, Zufuhröffnungen 46 auf, die gleichmäßig umlaufend auf einem gedachten Ring in einer eingangsseitigen Stirnwand 40 angeordnet sind. Der Ring, insbesondere Kreisring, auf dem die Zufuhröffnungen 46 angeordnet sind, befindet sich im äußeren Bereich der Stirnwand 40, sodass der radiale Abstand der Zufuhröffnungen 46 (bezüglich ihrer Mittelpunkte) zu der Umfangswandung 3 geringer ist als zu der Längsachse L.

Die Zufuhröffnungen 46 sind, für eine teilweise vorgemischte Zufuhr von Brennluft und Brennstoff, Luft-/Brennstoffdüsenanordnungen 41 zugeordnet, die jeweils eine Mischstufe aufweisen. Dabei ragt je eine Zufuhrdüse 47 mit einem durch einen Zylinderabschnitt gebildeten stromaufseitigen Ende in ein Luftplenum 49 hinein und bildet so eine Luftzufuhr 45. Stromab der Luftzufuhr 45 verjüngt sich der Querschnitt des Zylinderabschnitts zur Bildung einer Beschleunigungsstrecke über einen konischen axialen Bereich und ragt mit einem verjüngten, stromabseitigen Abschnitt durch die Stirnwand 40 in die Brennkammer 10 hinein. Der in die Brennkammer 10 ragende Abschnitt ist ebenfalls zylinderförmig ausgebildet, kann aber auch eine andere Form aufweisen. Die Zufuhrdüsen 47 erstrecken sich entlang von Mittellängsachsen M, die parallel zur Längsachse L ausgerichtet sind, zur axialen Zufuhr des teilvorgemischten Brennstoff-Luft-Gemisches in die Brennkammer 10.

In jeweils eine Zufuhrdüse 47 hinein ragt eine Zweigleitung 43 einer fingerartigen Leitungsanordnung. Dabei gehen die Zweigleitungen 43 fingerartig von einem zentralen Brennstoffzuführkanal 42 ab, wobei sie eine gewisse Leitungslänge, bspw. mehr als dreimal so lang wie der Leitungsaußendurchmesser, aufweisen und für eine genaue Zuführung des Brennstoffes von dem zentralen Brennstoffzuführkanal 42 radial mittig in die Zufuhrdüse 47 mit einem Richtungswechsel, hier für eine günstige Strömungsführung gebogen, ausgeführt sind. Je eine Zweigleitung 43 mündet in einer Brennstoffdüse 44, die unmittelbar stromauf des verjüngten Abschnitts, mit einer Mündung unmittelbar zu Beginn der Beschleunigungsstrecke, positioniert ist. Der Brennstoff kann so koaxial der einströmenden Brennluft zugegeben werden, wobei unmittelbar stromab der Brennstoff-Zugabeposition die Brennluft durch die Querschnittsverengung beschleunigt wird. Bis zu der Zufuhröffnung 46 kann eine Teil-Vormischung von Brennstoff und Brennluft stattfinden. Möglich wäre auch eine andere Luft-/Brennstoffdüsenanordnung 41, wobei auch auf eine Vormischung gänzlich verzichtet werden könnte.

Die Zweigleitungen 43 werden aus dem zentralen Brennstoffzuführkanal 42 als Brennstoffzuführung gespeist, sodass sich eine symmetrische Anordnung der Brennstoffzufuhr ergibt, bei der nicht explizit ein Brennstoffplenum vorgesehen ist. Dadurch kann auf einen hohen Druckverlust zur gleichmäßigen Verteilung des Brennstoffes, wie in der Regel bei Ausführungen mit Brennstoffplenum vorgesehen, verzichtet werden.

Bezüglich der Brennkammer 10 bzw. der Stirnwand 40 ist die Anordnung zur Brennstoffzufuhr mit dem Brennstoffzuführkanal 42 und den fingerartigen Zweigleitungen 43 über ein Positionierelement 48 in Position gebracht. Dieses ist vorliegend stangenartig zentral ausgebildet, kann aber auch anders ausgeführt sein und/oder mehrere Elemente aufweisen.

Die Stirnwand 40 ist entgegen der Anströmrichtung bezüglich der Brennluft konisch verjüngt, um den Anströmverlust im Betrieb gegenüber einer flachen Ausführung zu verringern.

Die Umfangswandung 3 der Brennkammer 10 besitzt eine im Wesentlichen zylindrische Innenumfangsfläche und weist entsprechend einen kreiszylindrischen Querschnitt auf. Sie erstreckt sich längs um die Längsachse L, die vorliegend zugleich die Symmetrieachse des Brennkammersystems 1 bildet. Im ausgangsseitigen Endbereich der Brennkammer 10 sind rundum in der Umfangswandung 3 verteilt Mischluftöffnungen 30 zum Zuführen von Mischluft in das verbrannte, aus der Brennkammer 10 strömende Abgas eingebracht. Diese sind vorliegend in einer Reihe ringartig, radial gleichmäßig um die Umfangswandung 3 verteilt und im Einzelnen als Kreisbohrungen ausgeführt, wobei andere Öffnungsformen und auch andere Anordnungen möglich sind.

Stromab der Mischluftöffnungen 30, an der der Stirnwand 40 gegenüberliegenden Seite der Brennkammer 10, ist eine ausgangsseitige Ausströmöffnung 31 zum Austritt der verbrannten Abgase aus der Brennkammer 10 vorgesehen. Stromab an die Ausströmöffnung 31 schließt sich ein Abgasbereich 5 an (hier nicht dargestellt), der die verbrannten Abgase weiterleitet, beispielsweise in Richtung einer stromab angeschlossenen Turbine. In dem Abgasbereich 5 finden keine Verbrennungsreaktionen mehr statt, wobei Nachreaktionen im Abgas nicht ausgeschlossen sind. Die Ausströmöffnung 31 ist derart dimensioniert, dass ihr Radius mindestens so groß ist wie der radiale Abstand der hier ringförmig angeordneten Zufuhröffnungen 46 von der Längsachse L (bezüglich der Mitte der Zufuhröffnungen 46). Vorliegend entspricht der Radius der Ausströmöffnung 31 dem Radius eines Querschnitts des Brennraums 2. Es wird somit auf eine Querschnittsänderung innerhalb der Brennkammer 10, insbesondere auf eine Verjüngung, verzichtet. Dies bringt wesentliche Vereinfachungen bei der Fertigung der Umfangswandung 3. Jedoch ist nicht ausgeschlossen, dass weiter stromab, als Übergang auf eine nachfolgende Komponente, insbesondere eine Turbine, eine Querschnittsänderung vorgesehen ist. Diese beeinflusst jedoch nicht in unmittelbarer Weise die Strömungsführung in der Brennkammer 10.

Im Betrieb wird dem Brennkammersystem 1 Luft durch das Luftplenum 49 zugegeben, die auch andere Bestandteile, z.B. extern rezirkuliertes Abgas oder Prozessgase, aufweisen könnte. In Fig. 1 ist die Luftführung durch Pfeile angedeutet. Die Luft teilt sich gemäß einem bestimmten Verhältnis, das durch die Geometrie festgelegt ist, in einen Mischluftanteil und einen Brennluftanteil auf. Die Mischluft wird entlang der Stirnwand 40 und der Außenseite der Umfangswandung 3 geleitet, wobei die Strömungsführung durch die konische Verjüngung der Stirnwand 40 widerstandsarm gestaltet ist. Die die Brennkammer 10 umströmende Mischluft kühlt die Stirnwand 40 und die Umfangswandung 3 insbesondere konvektiv.

Die restliche Luft gelangt als Brennluft durch die Luftzufuhren 45 in die Luft-/Brennstoffdüsenanordnungen 41. Hier wird der Brennluft Brennstoff koaxial zur Hauptströmungsrichtung in die Zufuhrdüsen 47 unmittelbar stromauf der Querschnittsverengungen zugegeben, sodass über die durch die Querschnittsverengungen gebildeten Beschleunigungsstrecken die Brennluft mit dem zugegebenen Brennstoff beschleunigt wird. Bis zu den Austrittsöffnungen 46 erfolgt eine teilweise Vermischung von Brennluft und Brennstoff. Dieses Gemisch wird nun der Brennkammer 10 zugeführt, entzündet sich dort und wird in der Verbrennungszone verbrannt. In dem Brennraum 2 bildet sich eine Rezirkulationsströmung mit einer inneren Rezirkulation des verbrannten Abgases aus, durch die ein Teil des verbrannten Abgases wieder in einen Bereich stromauf der Verbrennungszone zurückgeführt wird und sich in die noch unverbrannten Frischgase einmischt (in der Figur durch Pfeile angedeutet). Auf diese Weise wird die Verbrennungstemperatur reduziert. Die verhältnismäßig weit außen angeordneten Zufuhröffnungen 46 begünstigen dabei eine im Wesentlichen nach innen gerichtete Rezirkulation, sodass die zurückströmenden Abgase in einer inneren Rezirkulationszone, umgeben von der ringförmigen Verbrennungszone, zurückströmen, d.h. näher an der Längsachse L vorbei als die verbrennenden Gase. Durch die im Wesentlichen innere Rezirkulation wird eine kompakte Strömungsführung erreicht, wodurch wiederum die Brennkammer 10 insbesondere bezüglich ihrer Länge kompakt ausgelegt werden kann.

Der Brennerkopf 4 und die Brennkammer 10 sind derart ausgelegt, dass die Verbrennungs- und Rezirkulationszone stromauf der Mischluftöffnungen 30 gelegen sind. Die durch die Mischluftöffnungen 30 zugegebene Mischluft mischt sich im Wesentlichen in das in Richtung stromab in den Abgasbereich 5 strömende Abgas ein und kühlt dieses. Ein Teil der Mischluft kann jedoch durch die Rückzirkulation erfasst werden und in Richtung Brennerkopf 4 transportiert werden.

Der Brennerkopf 4 und die Brennkammer 10 sind derart ausgelegt, dass sich eine Rezirkulationsrate von kleiner 1,5, bevorzugt kleiner 1, beispielsweise 0,4 bis 0,8 ergibt. Diese Rezirkulationsrate erlaubt eine über einen weiten Betriebsbereich stabile Verbrennung, wobei die Emissionsgrenzwerte eingehalten werden können. Beeinflussend auf die Rezirkulationsrate wirkt sich beispielsweise die Geschwindigkeit des Frischgases bei Zugabe in die Brennkammer 10 aus, die bei derartigen Rezirkulationsraten entsprechend geringer gewählt werden kann als im Betrieb der flammenlosen Oxidation. Beispielhafte Werte liegen um 80 m/s bis 100 m/s, z. B. 90 m/s, wobei die Geschwindigkeit jedoch stark u.a. vom Betriebspunkt abhängig ist und daher variieren kann. Derartige Rezirkulationsraten lassen sich durch die vorliegend beschriebene Geometrie, insbesondere die Dimensionierung der Ausströmöffnung 31, erreichen, wobei auf eine Verjüngung zur Unterstützung der Rezirkulation verzichtet werden kann. Eine Unterstützung der Rezirkulation wird durch die Zugabe der Mischluft durch die Mischluftöffnungen 30 stromab der Verbrennungszone erreicht, die einen gewissen Gegendruck aufbaut. Daher ist der axiale Abstand der Mischluftöffnungen 30 von der Stirnwand 40 derart ausgelegt, dass sie gerade stromab der Rezirkulationsströmung liegen und die Mischluft nicht bzw. zu einem geringen Anteil in die Rezirkulation mit einbezogen wird. Auf diese Weise ergibt sich zugleich eine Anordnung der Mischluftöffnungen 30 möglichst weit stromauf, sodass das nicht an der Rezirkulation teilnehmende Abgas möglichst früh verdünnt und heruntergekühlt werden kann, um eine unnötige hohe thermische Materialbelastung zu vermeiden. Die Positionierung der Mischluftöffnungen 30 orientiert sich somit an der axialen Ausdehnung der Rezirkulationsströmung.

Im Übergang zwischen der Brennkammer 10 und dem Abgasbereich 5 kann eine Änderung der Querschnittsgeometrie vorgesehen sein, wobei jedoch die Auströmöffnung 31 die definierte Mindestgröße aufweist. Zusätzlich oder alternativ können für die Brennkammer 10 und den Abgasbereich 5 verschiedene Materialien verwendet sein oder diese einstückig aus einem Material gestaltet sein. Bei der einstückigen Gestaltung ohne die Geometrie- und/oder Materialänderung kann der Übergang zwischen der Brennkammer 10 und dem Abgasbereich 5 als stromab der Mischluftöffnungen 30 gelegen definiert werden, in dem axialen Bereich, ab dem das Abgas-Mischluft-Gemisch im Wesentlichen stromab strömt.

Das beschriebene Brennkammersystem 1 erlaubt eine stabile Verbrennungsprozessführung über einen weiten Betriebsbereich, wobei die Brennkammer 10, insbesondere die Umfangswandung 3, verhältnismäßig einfach herzustellen ist.

## Patentansprüche

1. Brennkammersystem (1) mit einem sich in Richtung einer Längsachse (L) innerhalb einer Umfangswandung (3) einer Brennkammer (10) erstreckenden Brennraum (2),
innerhalb dessen im Betrieb eine Rezirkulationsströmung mit großteils durch eine innere Rezirkulationszone zurückgeführtem Abgas ausgebildet ist und der eingangsseitig von einer umlaufend mit Zufuhröffnungen (46) für Brennluft und Brennstoff versehenen Stirnwand (40) begrenzt ist und ausgangsseitig eine Ausströmöffnung (31) aufweist,
und mit einem Brennerkopf (4), über den Brennluft und Brennstoff über gemeinsame Zufuhröffnungen (46) teilweise vorgemischt oder über separate Zufuhröffnungen (46) getrennt in die Brennkammer (10) zugeführt sind,
wobei die Zufuhröffnungen (46) in ringförmiger Anordnung im äußeren Bereich der Stirnwand (40), näher an der Umfangswandung (3) als an der Längsachse (L) gelegen, angeordnet sind und
wobei der Radius der Ausströmöffnung (31) mindestens so groß ist wie der radiale Abstand der Zufuhröffnungen (46) von der Längsachse (L),
**dadurch gekennzeichnet,**
**dass** die Brennkammer (10) und der Brennerkopf (4) so ausgelegt sind, dass eine Rezirkulationsrate im Betriebszustand zwischen 0,4 und 1,5 beträgt.

2. Brennkammersystem (1) nach Anspruch 1,
**dadurch gekennzeichnet,**
**dass** die Umfangswandung (3) der Brennkammer (10) eine im Wesentlichen zylindrische Innenumfangsfläche mit einem insbesondere kreiszylindrischen Querschnitt des Brennraums (2) besitzt und der Radius der Ausströmöffnung (31) dem Radius eines Querschnitts des Brennraums (2) entspricht.

3. Brennkammersystem (1) nach Anspruch 1 oder 2,
**dadurch gekennzeichnet,**
**dass** der Brennerkopf (4) für eine teilweise vorgemischte Zuführung von Brennstoff und Brennluft mindestens eine Mischstufe mit einströmseitiger Brennstoffdüse (44) und einer diese umgebenden Luftzufuhr (45) einer Zufuhrdüse (47) in einer Luft-/ Brennstoffdüsenanordnung (41) aufweist.

4. Brennkammersystem (1) nach Anspruch 3,
**dadurch gekennzeichnet,**
**dass** die Mündung der Brennstoffdüse (44) radial in einem Zentrumsbereich, insbesondere im Wesentlichen auf einer Mittellängsachse (M), der Zufuhrdüse (47) zur Zugabe des Brennstoffes in die Brennluft außerhalb des Wandströmungsbereiches angeordnet ist.

5. Brennkammersystem (1) nach Anspruch 3 oder 4,
**dadurch gekennzeichnet,**
**dass** die Mündung der Brennstoffdüse (44) an einer axialen Position der Zufuhrdüse (47) angeordnet ist, unmittelbar stromab oder stromauf derer die Luft-/ Brennstoffdüsenanordnung (41) zur Beschleunigung der Brennluft ausgebildet ist, derart, dass der Brennstoff zu Beginn einer Beschleunigungsstrecke oder stromab davon in die bereits beschleunigende oder beschleunigte Strömung zugegeben wird.

6. Brennkammersystem (1) nach einem der vorhergehenden Ansprüche,
**dadurch gekennzeichnet,**
**dass** der Brennerkopf (4) zum Zuführen des Brennstoffes mit einer zentralen Brennstoffzuführung versehen ist.

7. Brennkammersystem (1) nach Anspruch 6,
**dadurch gekennzeichnet,**
**dass** der Brennerkopf (4) zum Zuführen von Brennstoff eine mit den Zufuhröffnungen (46) in Strömungsverbindung stehende fingerartige Leitungsanordnung mit Zweigleitungen (43) aufweist, die an ihren stromabseitigen Enden mit Brennstoffdüsen (44) versehen sind, wobei die Zweigleitungen (43) von der zentralen Brennstoffzuführung fingerartig abgehen.

8. Brennkammersystem (1) nach einem der vorhergehenden Ansprüche,
**dadurch gekennzeichnet,**
**dass** die Stirnwand (40) oder eine ihr stromauf vorgelagerte Anströmfläche entgegen der Anströmrichtung konisch verjüngt ist.

9. Brennkammersystem (1) nach einem der vorhergehenden Ansprüche,
**dadurch gekennzeichnet,**
**dass** zu Kühlungszwecken Mischluft außen an der Umfangswandung (3) vorbeigeführt ist.

10. Brennkammersystem (1) nach Anspruch 9,
**dadurch gekennzeichnet,**
**dass** im ausgangsseitigen Endbereich der Brennkammer (10) rundum in der Umfangswandung (3) verteilt Mischluftöffnungen (30) zum Zuführen der Mischluft in das Abgas eingebracht sind.

11. Brennkammersystem (1) nach einem der vorhergehenden Ansprüche,
**dadurch gekennzeichnet,**
**dass** die Umfangswandung (3) eine zylindrische, insbesondere kreiszylindrische Innenumfangsfläche besitzt und länger ist als ihr Innendurchmesser.

12. Brennkammersystem (1) nach einem der vorhergehenden Ansprüche,
**dadurch gekennzeichnet,**
**dass** der Brennerkopf (4) und die Brennkammer (10) für einen einstufigen Verbrennungsprozess ausgelegt sind.

13. Verwendung eines Brennkammersystems (1) nach einem der vorhergehenden Ansprüche in Verbindung mit einer ausgangsseitig der Brennkammer (10) angeschlossenen Turbine, insbesondere in Ausbildung als Mikrogasturbine.

14. Verfahren zur Durchführung eines Verbrennungsprozesses in einem Brennkammersystem (1), insbesondere nach einem der vorhergehenden Ansprüche, wobei eingangsseitig Brennluft und Brennstoff über umlaufend in einer Stirnwand (40) angeordnete Zufuhröffnungen (46) in einen innerhalb einer Umfangswandung (3) einer Brennkammer (10) erstreckenden Brennraum (2) zugeführt und dort verbrannt werden und wobei ein Teil des verbrannten Abgases innerhalb der Brennkammer großteils in einer inneren Rezirkulationszone zurückgeführt wird,
**dadurch gekennzeichnet,**
**dass** die Rezirkulationsrate zwischen 0,4 und 1,5 beträgt.
